# EUROPEAN PATENT SPECIFICATION

(11) **EP 2 218 544 B1**
(45) Date of publication and mention of the grant of the patent: **16.05.2012**
(21) Application number: 09152845.5
(22) Date of filing: 13.02.2009
(51) Int. Cl.: B23Q 17/20, B23D 1/02

(54) **Method for machining tubes**
Verfahren zur Herstellung von Rohren
Procédé d'usinage de tuyaux

(43) Date of publication of application: 18.08.2010
(73) Proprietor: van Sorgen, Carel Johannes Wilhelm Theodoor, 7101 BN Winterswijk (NL)
(72) Inventor: van Sorgen, Carel Johannes Wilhelm Theodoor, 7101 BN Winterswijk (NL)
(74) Representative: 't Jong, Bastiaan Jacob

(56) References cited:
- EP-A- 1 516 696
- US-A- 5 267 381
- US-A- 5 726 366

## Description

The invention relates to a method for computer controlled machining of tubes, in particular laser / Plasma and water cutting tubes, according to the preamble of claim 1 (see, for example, US-5,726,366).

Prior art machining stations for tubes perform some kind of machining to a tube, for example drilling a hole, laser cutting parts out of the tube, sawing a tube in two parts or grinding a tube surface. The prior art machining stations execute a program to move the tools of the machine to desired positions in order to perform the desired machining to the tube. These programs assume that a tube having certain dimensions is present in the machining station.

Tubes can be manufactured by extrusion of the material, which is typically used for plastic tubes or aluminum tubes. Tubes can also be manufactured by forming a strip into a tube and welding it. This kind of manufacturing is often used for steel pipes.

As a result of these manufacturing processes the dimensions of the tube, in particular the cross sectional dimensions can differ resulting in a certain tolerance on the desired dimensions of a tube.

When the required machining accuracy is within the same range as the tolerance of the tubes, it is with the prior art machining stations no longer possible to assure that a machined tube is within the required accuracy. This is a result of the assumption within the program executed on the machining station, that a tube has certain dimensions. Suppose for example that it is desired to have a hole drilled in the center of a surface of a tube with square cross section. If the machining station calculates the position of the hole from an edge of the surface and assumes that the surface has a certain width, a deviation in the actual position of the hole can occur. If the real width of the tube is less or more than the assumed width, a deviation in the position in the hole will occur. These errors can also occur as a result of a deviation in the cross sectional shape of a tube.

It is an object of the invention to provide a method for computer controlled machining of tubes in which the above mentioned disadvantages are reduced.

This object is achieved by a method according to claim 1.

By measuring a tube before, or during it is arranged in the computer controlled machining station, it is known whether the tube is within the necessary tolerance or not. This makes it possible to reject the tube based on the measurements or to adjust the program executed on the machining station.

The measured dimensions comprise the cross sectional dimensions of the tube. When the cross section of a tube deviates from the theoretical shape, the resulting machining operations could have a considerable deviation. Suppose for example a square tube should have on two opposite surfaces a hole, which holes should be aligned. When the square tube is in real a bit trapezoid, the holes resulting from machining operations, which assume a square tube, will no longer be aligned. However, when the cross sectional dimensions are measured before machining, the program can take the deviations into account, such that the holes are machined at such a positions, that these holes are still aligned, although the real cross section of the tube is trapezoid instead of the assumed square cross section.

The cross sectional dimensions of the tube are measured at several positions along the length of the tube. It would be possible that the cross section varies over the length of the tube, and a possible torsion is measured also.

As already mentioned above it is a very preferred embodiment of the method according to the invention, in which the measured dimensions are used during executing the program to correct for any deviations of the provided length of tube.

In yet another embodiment of the invention a length of tube is provided out of a number of lengths of tubes having different cross sections and wherein a program to be executed on the computer controlled machining station is selected on the basis of the measured dimensions of the provided length of tube.

This enables one to randomly pick the necessary tubes and feed the tubes in a random order to the machining station. Machining stations are generally used to produce a number of different orders. Some orders need part of a certain length of tube. When such a length of tube is arranged in the machining station, the parts for the different orders can be manufactured out of the one length of tube. When the tubes are provided in random order it can be determined based on the measurements of the tubes, which parts of which orders can be produced with the provided tube.

In yet another embodiment of the method according to the invention the measured tube is provided with marks, for example by printing a code on the surface of the tube. When the tube is measured it is also possible to provide a mark to parts of the tube, which facilitate for example the handling of the tube after machining the tube. If out of one tube length several parts for several orders are produced, the marks can indicate which part is for which order.

It is further preferred to use the measurement data for calculating statistics. These statistical data can for example be used to check the quality of the tubes.

It is also possible that the program for controlling the machining station takes into account the calculated statistics.

These and other features of the invention will be elucidated in conjunction with the accompanying drawings.
Figure 1 shows in schematic view the steps of an embodiment of the method according to the invention.
Figures 2A and 2B show the supposed shape and the measured shape respectively of a tube.

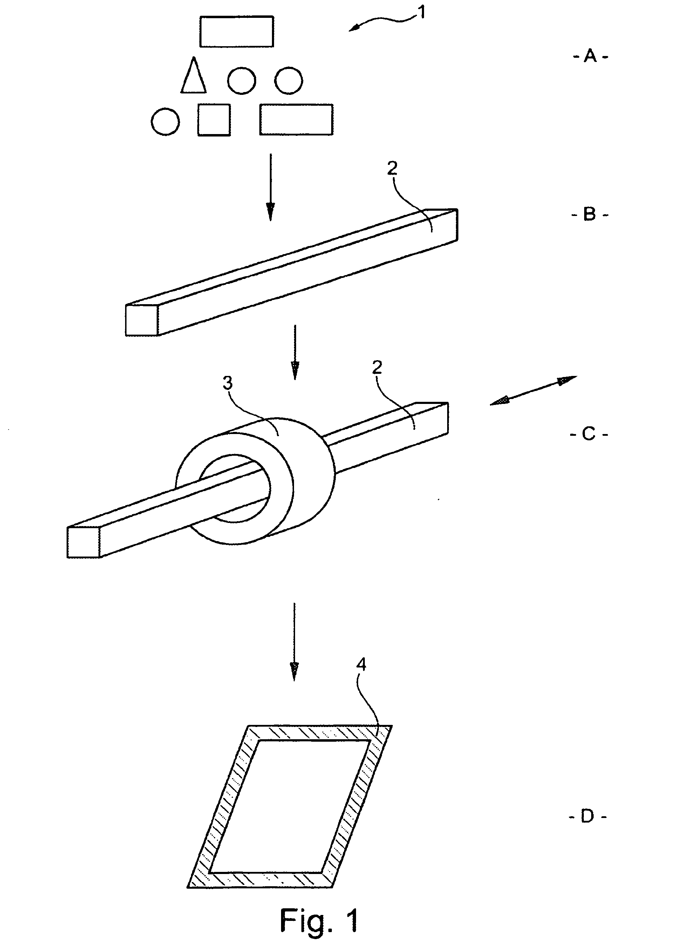

In figure 1 the four steps A-D are shown of an embodiment of the method according to the invention.

In step A a number of tubes 1 are provided with varying cross sectional shapes. One of the tubes 2 is selected out of this random set of tubes 1 in step B. In this example, the selected tube 2 has a square cross section.

Although the cross section is substantially square, the actual shape could differ. Therefore the tube 2 is measured in step C by a measuring device 3. This measuring device 3 measures the dimensions of the tube 2 at different positions along the length of the tube 2. These measurements can be done in a conventional way. For example the measurement device 3 could use r a probe which is moved along the surface of the tube, or could use for example contact and non-contact measuring devices as ultrasonic and pixel oriented measuring devices.

The resulting measurements of the measuring device 3 are show in step D. Although slightly exaggerated, it is clear that the cross section 4 of the tube 2 is not absolutely square.

Now the exact shape of the tube 2 at a particular cross section 4 is known, the controller of the machining station can take this deviation from the assumed shape in to account when performing some machining on the tube 3.

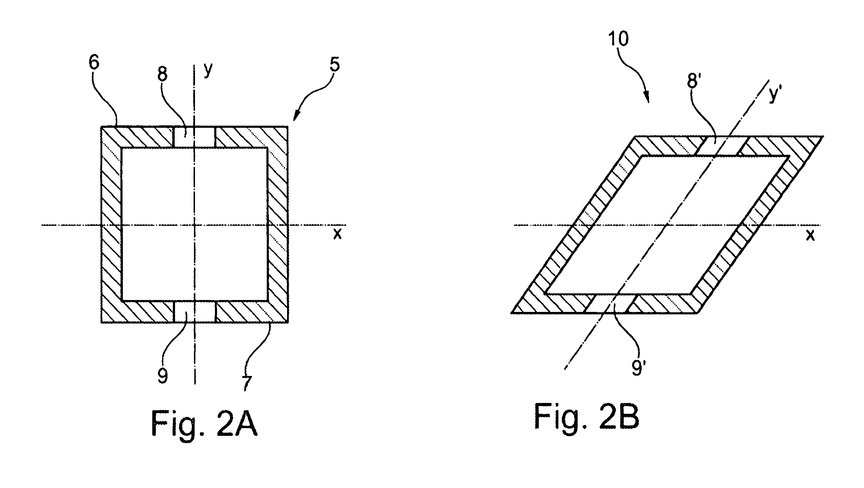

In figure 2A a desired shape 5 of the tube 3 after machining is shown. In this desired shape 5 it is assumed that the tube has a perfectly square cross section. In the top surface 6 and the bottom surface 7 holes 8, 9 are arranged being aligned with the y-axis.

As explained above the true shape of the tube 2 is measured. In step D of figure 1, this measured cross section 4 is shown.

The controller of the machining station can now take into account the deviation by comparing the assumed shape 5 with the measured shape 4. As the measured shape 5 is trapezoid, the controller can decide, based on predefined rules, to tilt the y-axis such that the holes 8 and 9 will still be aligned.

In figure 2B the corrected shape 10 is shown. In this corrected shape 10, the y'-axis is tilted relative to the original y-axis. Also the holes 8' and 9' are tilted such that they are still aligned and a rod can be inserted into both holes 8' and 9'. During the measuring of the tube, the tube is held into the machine-clamps and is fixed. The theoretical x and y-axis of the machine and those from the fixed tube can be different in angle and the shape of the tube can be different to the theoretical shape hold by the clamps of the machine. So there are two deviations who have to be corrected.

The choice on how to correct the assumed shape 5 should be based on the function of the elements in a shape. In the example shown in figures 2A en 2B, a rod or tube must be inserted into the holes 8' and 9'. So when correcting, it is necessary that the holes 8' and 9' are still on one axis y' and that the side walls of the holes 8' and 9' are parallel to this axis y'.

When using the method according to the invention for manufacturing the parts of a tube frame, a situation can occur, in which a tube has to be inserted into a hole made in another tube. When the tube to be inserted is in diameter larger, than assumed, it could occur that the tube frame cannot be assembled, because the hole is made for the assumed diameter. The hole can of course be made large enough to fit even a larger tube, but by using a logistic algorithm, such situations can be avoided. Such an algorithm should decide which tube should be measured and made first.

## Claims

1. Method for computer controlled machining of tubes, in particular laser-, plasma- and water- cutting tubes, the method comprising the steps of:
- providing a length of tube;
- measuring the dimensions of the provided length of tube prior to arranging the tube in the computer controlled machining station, wherein the measured dimensions comprise the cross sectional dimensions of the tube;
- arranging the provided tube in a computer controlled machining station;
- executing a program for controlling the machining station in order to machine the provided tube;
**characterized in that**
the cross sectional dimensions of the tube are measured at several positions along the length of the tube.

2. Method according to claim 1, wherein the measured dimensions are used during executing the program to correct for any deviations of the provided length of tube.

3. Method according to claim 1 or 2, wherein a length of tube is provided out of a number of lengths of tubes having different cross sections and wherein a program to be executed on the computer controlled machining station is selected on the basis of the measured dimensions of the provided length of tube.

4. Method according to any of the preceding claims, wherein the measured tube is provided with marks, for example by printing or lasermarking a code on the surface of the tube.

5. Method according to any of the preceding claims, wherein the measurement data is used for calculating statistics.

6. Method according to claim 5, wherein the program for controlling the machining station takes into account the calculated statistics.

## Patentansprüche

1. Verfahren zur computergesteuerten Bearbeitung von Rohren, insbesondere zum Laser-, Plasma und Wasserschneiden von Rohren, wobei das Verfahren die folgenden Schritte umfasst:
- Bereitstellen einer Rohrlänge;
- Messen der Abmessungen der bereitgestellten Rohrlänge vor dem Anordnen des Rohrs in der computergesteuerten Bearbeitungsstation, wobei die gemessenen Abmessungen die Querschnittabmessungen des Rohrs umfassen;
- Anordnen des bereitgestellten Rohrs in einer computergesteuerten Bearbeitungsstation;
- Durchführen eines Programms zur Steuerung der Bearbeitungsstation, um das bereitgestellte Rohr zu bearbeiten;
**dadurch gekennzeichnet, dass**
die Querschnittabmessungen des Rohrs an mehreren Positionen entlang des Rohrs gemessen werden.

2. Verfahren nach Anspruch 1, wobei die gemessenen Abmessungen während der Durchführung des Programms verwendet werden, um jede Abweichung von der bereitgestellten Länge des Rohrs zu korrigieren.

3. Verfahren nach Anspruch 1 oder 2, wobei eine Rohrlänge aus einer Anzahl von Rohrlängen mit verschiedenen Querschnitten bereitgestellt wird, und wobei ein Programm, das auf der computergesteuerten Bearbeitungsstation durchgeführt werden soll, auf der Grundlage der gemessenen Abmessungen der bereitgestellten Rohrlänge ausgewählt wird.

4. Verfahren nach einem der vorhergehenden Ansprüche, wobei das gemessene Rohr mit Markierungen ausgestattet ist, z.B. durch Aufdrucken oder Lasermarkieren auf der Oberfläche des Rohrs.

5. Verfahren nach einem der vorhergehenden Ansprüche, wobei die Messdaten zur Berechnung einer Statistik verwendet werden.

6. Verfahren nach Anspruch 5, wobei das Programm zur Steuerung der Bearbeitungsstation die berechnete Statistik berücksichtigt.

## Revendications

1. Procédé d'usinage de tuyaux commandé par ordinateur, en particulier de tuyaux à usiner au laser, au jet de plasma et au jet d'eau, le procédé comprenant les étapes suivantes consistant à :
- fournir une longueur de tuyau ;
- mesurer les dimensions de la longueur fournie du tuyau avant de le disposer dans le poste d'usinage commandé par ordinateur, dans lequel les dimensions mesurées comprennent les dimensions de section transversale du tuyau ;
- disposer le tuyau fourni dans un poste d'usinage commandé par ordinateur ;
- exécuter un programme destiné à commander le poste d'usinage dans le but d'usiner le tuyau fourni ;
**caractérisé en ce que** les dimensions de section transversale du tuyau sont mesurées à plusieurs endroits le long de la longueur du tuyau.

2. Procédé selon la revendication 1, dans lequel les dimensions mesurées sont utilisées pendant l'exécution du programme pour corriger toute déviation de la longueur fournie du tuyau.

3. Procédé selon la revendication 1 ou 2, dans lequel une longueur de tuyau est fournie en dehors d'un nombre de longueurs de tuyaux présentant différentes sections transversales et dans lequel un programme à exécuter sur le poste d'usinage commandé par ordinateur est sélectionné sur la base des dimensions mesurées de la longueur fournie du tuyau.

4. Procédé selon l'une quelconque des revendications précédentes, dans lequel le tuyau mesuré est doté de marques, par exemple par impression ou marquage laser d'un code sur la surface du tuyau.

5. Procédé selon l'une quelconque des revendications précédentes, dans lequel les données de mesure sont utilisées pour calculer des statistiques.

6. Procédé selon la revendication 5, dans lequel le programme pour commander le poste d'usinage prend en considération les statistiques calculées.
